# EUROPÄISCHE PATENTSCHRIFT

(11) **EP 2 681 063 B1**
(45) Veröffentlichungstag und Bekanntmachung des Hinweises auf die Patenterteilung: **01.03.2017**
(21) Anmeldenummer: 11735797.0
(22) Anmeldetag: 16.07.2011
(51) Int. Cl.: H01Q 9/30, H01Q 13/10, B60J 10/90, H01Q 1/32, H01Q 1/38

(54) **ANTENNENANORDNUNG IN EINEM KRAFTFAHRZEUG**
ANTENNA ARRANGEMENT IN A VEHICLE
ARRANGEMENT D'ANTENNE DANS UN VÉHICULE

(30) Priorität: 04.03.2011 DE 102011012963
(43) Veröffentlichungstag der Anmeldung: 08.01.2014
(73) Patentinhaber: Audi AG, 85045 Ingolstadt (DE)
(72) Erfinder: JESCHKE, Markus, 85051 Ingolstadt (DE); ULLRICH, Christoph, 85301 Schweitenkirchen (DE); GERLEMANN, Eckhard, 85053 Ingolstadt (DE); KÖHLER, Mareen, 93107 Thalmassing (DE)
(74) Vertreter: Brandt, Kai
(86) Internationale Anmeldenummer: PCT/EP2011/003560
(87) Internationale Veröffentlichungsnummer: WO 2012/119619

(56) Entgegenhaltungen:
- DE-A1- 19 921 233
- FR-A- 1 197 127

## Beschreibung

Die Erfindung betrifft eine Antennenanordnung in einem Kraftfahrzeug nach dem Patentanspruch 1.

Aus aerodynamischen Gründen und auch zum Schutz gegen Beschädigungen können Antennen von Kraftfahrzeugen in Türdichtungen, Schiebedachdichtungen oder in anderen aus einem isolierenden Werkstoff hergestellten Dichtungen integriert sein. Aus der DE 199 21 233 A1 sind Ausführungsbeispiele solcher Dichtungen mit einer als Antenne dienenden Metalleinlage zum Empfang von elektromagnetischen Wellen bekannt. Bei diesen bekannten Ausführungsformen liegt die Antenne elektrisch isoliert in einer Dichtung ein und der Betrieb der Antennendichtung erfolgt stets im selben Antennenmodus, d.h. dass der Antennenleiter und der Rückleiter bzw. die Masse immer in derselben Funktionsweise betrieben werden. Damit diese selbe Funktionsweise auch bei einer Schiebedachdichtung unabhängig vom Öffnungszustand gewährleistet ist, werden in die Schiebedachdichtung der Antennenleiter und der Rückleiter, der die Antennenmasse bildet, integriert. Diese bekannten Dichtungsantennen werden immer in einem Modus betrieben, bei dem ein geringer Abstand zwischen dem Antennenleiter und der Antennenmasse besteht.

Um für eine Fahrzeugantenne eine möglichst hohe Antennenleistung zu erhalten, ist es nicht vorteilhaft, wenn der Abstand zwischen Antennenleiter und Antennenmasse sehr gering ist.

Der Erfindung liegt die Aufgabe zugrunde, eine Antennenanordnung in einem Kraftfahrzeug mit einer eine Antennenfunktion aufweisenden Dichtung zu schaffen, die möglichst gute Empfangseigenschaften hat.

Die Aufgabe ist durch die Merkmale des Patentanspruchs 1 gelöst. Bevorzugte Weiterbildungen der Erfindung sind in den Unteransprüchen offenbart.

Gemäß Patentanspruch 1 besitzt die Antennenanordnung wenigstens eine aus einem nichtleitenden Material bestehende Dichtung mit einer im Bereich einer Dichtungsfläche der Dichtung angebrachten Antenne zum Empfang von Funksignalen. An die Dichtung ist ein elektrisch leitendes Fahrzeugteil anlegbar, wobei es sich um ein Cabriodach, Schiebedach oder ein anderes vorzugsweise flächiges Metallteil handeln kann. Dieses flächige Metallteil in Verbindung mit der Antennenmasse übernimmt die Funktion einer Schlitzantenne. Liegt dagegen kein derartiges Fahrzeugteil an dem auf der Dichtung an, so arbeitet die Antenne als Empfangs-Monopol. Dabei ist es vorteilhaft, dass die Antenne bei nicht komprimierter Dichtung einen maximalen Abstand zu dem Karosserieteil hat, an welchem die Dichtung befestigt ist und welches vorzugsweise die Antennenmasse bildet.

Ist der elektrischen Leiter, der als Antenne dient, auf der Dichtung aufgebracht, so liegt das metallische Fahrzeugteil vorzugsweise mit einer metallischen Kontaktfläche an der Antenne an, wobei dann ein direkter elektrischer Kontakt zur Antenne besteht. Ein an dem elektrischen Leiter anliegendes Fahrzeugteil muss aber nicht zwingend einen direkten elektrischen Kontakt zum Leiter haben, um die Funktion einer Schlitzantenne zu erhalten. Sind beispielsweise die den Berührungskontakt zum elektrischen Leiter bildenden Flächen des anliegenden Fahrzeugteils durch eine Lackierung elektrisch gegenüber dem elektrischen Leiter isoliert und/oder liegt der elektrische Leiter in der Dichtung ein, so ergibt sich dennoch für die empfangenen Funksignale aufgrund ihrer hohen Frequenzen eine kapazitive Kopplung zwischen dem elektrischen Leiter und dem daran anliegenden Fahrzeugteil.

Bei einer weiteren bevorzugten Ausführungsform ist vorgesehen, dass die Dichtung einen c-förmigen Querschnitt und somit einen sich in Längsrichtung der Dichtung erstreckenden Öffnungsschlitz hat. Der schmale elektrische Leiter befindet sich bei dieser Ausführungsform in Längsrichtung der Dichtung auf deren dem Öffnungsschlitz abgewandten Außenseite der Dichtung, wodurch der elektrische Leiter einen maximalen Abstand zu dem den Befestigungsbereich der Gummidichtung bildenden Öffnungsschlitz hat. Am Öffnungsschlitz können seitlich gegenüberliegende Haltestege abstehen, mit denen sich die Dichtung auf sehr einfache Weise in einen Schlitz einer Metallfläche einsetzen lässt.

Die Erfindung kann grundsätzlich bei Dichtungen mit sehr unterschiedlichen Profilen angewandt werden, wie beispielsweise auch bei schlauchförmigen Dichtungen.

Die wirksame Dichtungsfläche der Dichtung ist vorzugsweise breiter als der elektrische Leiter, um zu gewährleisten, dass die Abdichtfunktion der Dichtung durch den elektrischen Leiter nicht beeinträchtigt wird. Dabei ist es vorteilhaft, wenn der auf der Dichtung angebrachte elektrische Leiter als eine sehr dünne Leiterbahn aufgedruckt oder als dünne Metallfolie aufgeklebt ist.

Die Antennenanordnung ist bevorzugt so ausgebildet, dass die Dichtung mit dem elektrischen Leiter eine von zwei oder mehreren Fahrzeugantennen bilden kann, die Teil eines Antennen-Diversitysystems sind. Ein Diversitysystem für ein Fahrzeug ist in der EP 1 076 375 A3 beschrieben. Mit Hilfe eines solchen Diversitysystems kann eine Optimierung der an das jeweilige Empfangsgerät bereitgestellten Empfangssignale erreicht werden, wenn Empfangssignale von zwei oder mehreren Fahrzeugantennen zur Verfügung stehen. Im vorliegenden Fall ist das Diversitysystem insbesondere auch dazu vorgesehen, um die Änderung der Empfangscharakteristik zu erkennen, die dann auftritt, wenn das Fahrzeugteil an die Dichtung bzw. an den elektrischen Leiter auf der Dichtung angelegt wird, oder wenn das Fahrzeugteil von der Dichtung bzw. von dem elektrischen Leiter entfernt wird. Das Diversitysystem kann in diesem Fall das jeweils bestmögliche Empfangssignal der gesamten Antennenanordnung auswählen und an einen Funkempfänger im Fahrzeug weiterleiten.

Die Erfindung wird nachfolgend anhand eines in der Zeichnung dargestellten Ausführungsbeispiels beschrieben.

Es zeigen:
- Fig. 1: die Anordnung eines als Antenne dienenden elektrischen Leiters auf einer elastischen, unkomprimierten Dichtung,
- Fig. 2: die Dichtung von Fig. 1, jedoch in geringfügig komprimierten Zustand bei Anliegen eines metallischen Fahrzeugteils,
- Fig. 3: die Stromverteilung bei einer als Empfangs-Monopol arbeitenden Antennenanordnung,
- Fig. 4: die Stromverteilung einer als Schlitzantenne arbeitenden Antennenanordnung,
- Fig. 5: ein Fahrzeug, an dem die Dichtung mit aufgebrachten elektrischen Leiter zur Abdichtung gegenüber einem Cabriodach angeordnet ist,
- Fig. 6: den schematisch dargestellten Aufbau eines Antennen-Diversitysystems,
- Fig. 7: die Anordnung eines als Antenne dienenden elektrischen Leiters in einer Dichtung,
- Fig. 8: die Anordnung eines als Antenne dienenden elektrischen Leiters auf einer schlauchförmigen Dichtung und
- Fig. 9: den Längsschnitt gemäß der Schnittebene AA der Anordnung von Fig. 8.

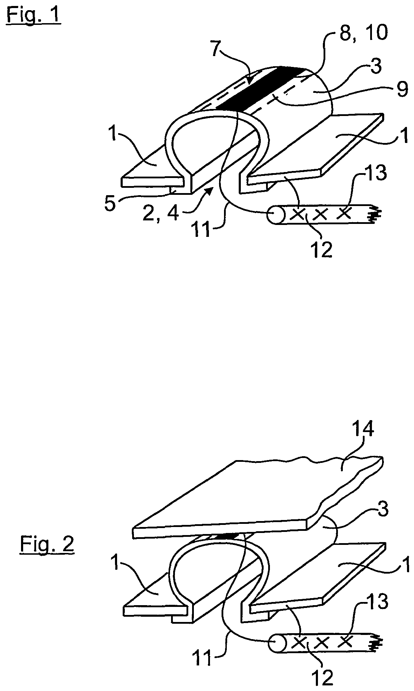

Der in Fig. 1 dargestellte Ausschnitt einer Metallfläche 1 eines Kraftfahrzeugs ist mit einem Längsschlitz 2 versehen, in dem eine elastische, aus nicht leitendem Material bestehende Dichtung 3 eingreift. Zu diesem Zweck sind an der Dichtung 3, die hier ebenfalls wie die Metallfläche 1 nur ausschnittsweise dargestellt ist, seitlich von einem sich in Längsrichtung der Dichtung 3 erstreckenden Öffnungsschlitz 4 abstehende Haltestege 5, 6 angeformt. Die Dichtung 3 lässt sich auf diese Weise in den Schlitz 2 der Metallfläche 1 sicher einsetzen.

An der dem Längsschlitz 4 gegenüberliegenden Außenseite 7 ist ein elektrischer Leiter 8 auf die Dichtung 3 im Bereich der Dichtungsfläche 9 aufgebracht. Die seitliche Begrenzung der Dichtungsfläche 9 ist durch unterbrochene Linien angedeutet.

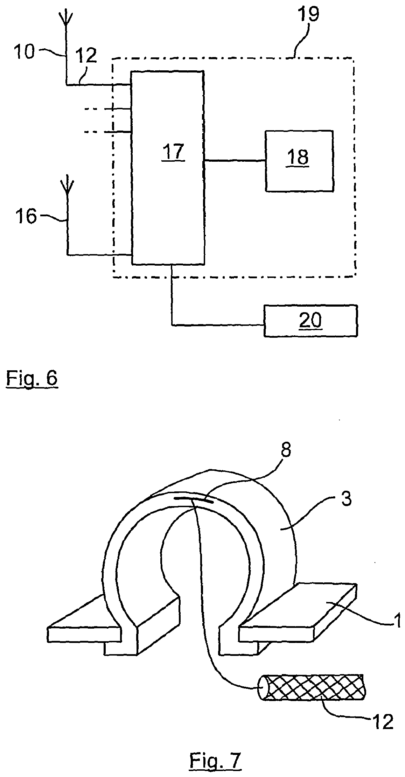

Der elektrische Leiter 8 hat die Funktion einer Antenne 10 und ist zu diesem Zweck mit dem Antennenleiter 11 eines Koaxialkabels 12 verbunden, dessen metallische Ummantelung 13 als Antennenmasse mit der metallischen Fläche 1 elektrisch verbunden ist. Das Koaxialkabel 12 kann mit einem Antennen-Diversitysystem verbunden sein, wie dies in Fig. 6 dargestellt ist.

Fig. 2 zeigt nun die Dichtung 3 von Fig. 1 mit einem an dem elektrischen Leiter 8 und an der sich seitlich neben diesem erstreckenden Dichtungsfläche 9 anliegenden metallischen Fahrzeugteil 14, welches beispielhaft hier Teil eines Cabriodaches ist. Durch das dichtende Anliegen des Fahrzeugteils 14 an der Dichtung 3 wird diese etwas niedergedrückt bzw. komprimiert, so dass eben nicht nur der elektrische Leiter 8, sondern auch die daran angrenzende Dichtungsfläche 9 am Fahrzeugteil 14 zur Anlage kommt. In diesem Fall besteht eine direkte oder wenigstens kapazitive elektrische Verbindung zwischen dem elektrischen Leiter 8 und dem Fahrzeugteil 14, so dass in Verbindung mit der Metallfläche 1 das metallische Fahrzeugteil 14 eine im Randbereich zwischen Metallfläche 1 und dem Fahrzeugteil 14 wirksame Schlitzantenne bildet. Bei Kontakt des Fahrzeugteils 14 mit dem auf die Dichtung 3 vorzugsweise aufgedruckten elektrischen Leiter 8 werden nun die Oberflächenströme des leitenden Fahrzeugteils 14 über das Koaxialkabel 12 abgegriffen.

Die Empfangscharakteristik der Antennenanordnung von Fig. 1 unterscheidet sich somit gegenüber der von Fig. 2, was durch ein einerseits geöffnetes Cabriodach im Fall von Fig. 1 und andererseits durch ein geschlossenes Cabriodach im Fall von Fig. 2 erreicht wird.

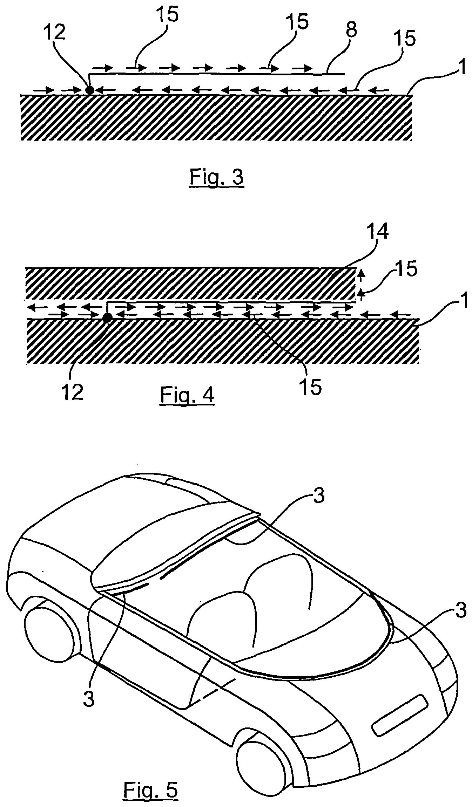

In Fig. 3 ist schematisch die Stromverteilung der gemäß Fig. 1 als Empfangs-Monopol arbeitenden Antenne dargestellt, wobei die Stromintensität durch unterschiedlich lange Richtungspfeile 15 angedeutet ist. Der elektrische Leiter 8 ist als parallel zur metallischen Fläche 1 verlaufender Antennendraht dargestellt, der an das Koaxialkabel 12 gemäß Fig. 1 angeschlossen ist.

In Fig. 4 ist das Prinzip der sich aus der Anordnung von Fig. 2 ergebenden Schlitzantenne dargestellt. Das metallische Fahrzeugteil 14, welches beispielhaft ein metallisches Cabriodach ist, befindet sich in einem geringen Schlitzabstand zu der metallischen Fläche 1, die beispielsweise durch Rahmenteile des Kraftfahrzeugs gebildet wird. Auch hier ist die durch eine einfallende elektromagnetische Welle sich ergebende Stromverteilung mittels Richtungspfeilen 15 angegeben und es erfolgt der Abgriff des Antennensignals über das Koaxialkabel 12. Über das Koaxialkabel 12 werden die durch die Richtungspfeile 15 angedeuteten Oberflächenströme am Fahrzeugteil 14 abgegriffen und können als Empfangssignal verwendet werden.

Die Darstellung von Fig. 5 zeigt ein Kraftfahrzeug mit geöffnetem Cabriodach, bei dem eine Dichtung 3, wie sie in Fig. 1 dargestellt ist, an mehreren Stellen angebracht ist. Die Dichtungen 3 können an ein Antennen-Diversitysystem angeschlossen sein, wie es in Fig. 6 dargestellt ist. An das Antennen-Diversitysystem 19 sind vorzugsweise weitere Fahrzeugantennen angeschlossen, um zur Optimierung des Funkempfangs das jeweils optimale Empfangssignal einer der verwendeten Antennen auswählen zu können. Als eine der weiteren Antennen kann beispielsweise eine Fensterantenne 16 Verwendung finden. Sämtliche Antennen 10, 16 des Fahrzeugs sind über eine Schalteinrichtung 17 an eine Auswerteeinrichtung 18 des Antennen-Diversitysystem 19 angeschlossen. Aus sämtlichen möglichen Empfangssignalen wählt die Auswerteeinrichtung 18 das optimale Empfangssignal aus und schaltet dieses über die Schalteinrichtung 17 zu einem Funkempfänger 20 durch.

Das Antennen-Diversitysystem 19 erkennt dabei auch die Änderung der Empfangscharakteristik der Dichtungsantennen mit dem auf der Dichtung 3 befindlichen elektrischen Leiter 8, wenn diese einerseits bei geöffnetem Cabrioverdeck als Empfangs-Monopol arbeiten, und andererseits als Schlitzantenne bei geschlossenem Cabrioverdeck arbeiten. Bei einer festgestellten Änderung der Antennencharakteristik kann dann bei Bedarf eine Umschaltung durch das Antennen-Diversitysystem 19 erfolgen, um einen optimalen Funkempfang zu gewährleisten.

Das dargestellte Ausführungsbeispiel gemäß Fig. 5 zeigt die Verwendung der Dichtung mit Antennenfunktion an einem Fahrzeug mit einem Cabriodach. Derartige Dichtungen können aber auch im Bereich des Schiebedachs oder im Bereich anderer Verschlussteile am Kraftfahrzeug verwendet werden.

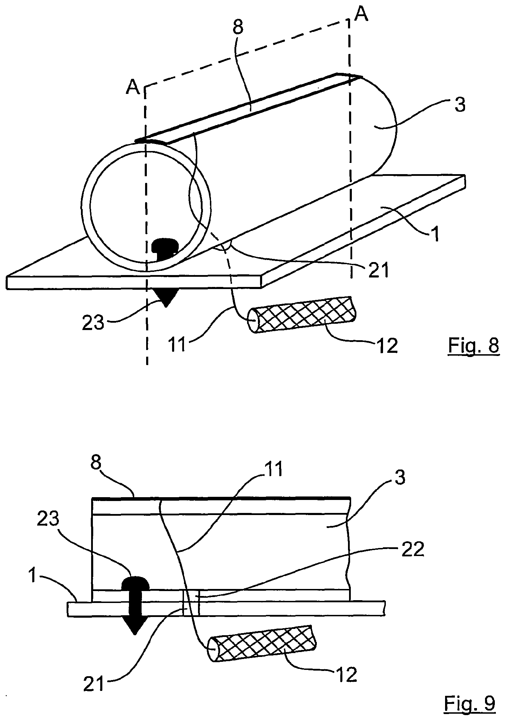

In den Figuren 7 bis 9 sind weitere Ausführungen von Dichtungen dargestellt, wobei in Fig. 7 der elektrische Leiter 8 im Dichtungsmaterial der Dichtung 3 einliegt, dagegen bei Fig. 8 und Fig. 9 eine schlauchförmige Dichtung 3 mit an der Dichtungsfläche aufgebrachtem elektrischen Leiter 8 dargestellt ist.

Bei der schlauchförmigen Dichtung 3 von Fig. 8 und Fig. 9 ist der Antennenleiter 11 durch entsprechende Löcher 21, 22 in der Metallfläche 1 und der Dichtung 3 hindurchgeführt. Die Dichtung 3 kann mittels mehrerer Befestigungselemente an der Metallfläche 1 befestigt sein, von denen ein zapfenförmiges Befestigungselement 23 beispielhaft dargestellt ist.

## Patentansprüche

1. Antennenanordnung für ein Kraftfahrzeug, die wenigstens eine aus einem nichtleitenden Material bestehende Dichtung (3) mit einer im Bereich einer Dichtungsfläche (7) der Dichtung (3) angebrachten Antenne (10) zum Empfang von Funksignalen hat, **dadurch gekennzeichnet, dass** die Anordnung ein Cabriodach oder Schiebedach oder sonstiges metallisches Fahrzeugteil (14) umfasst, welches an der Dichtungsfläche (7) während des Antennenbetriebs anlegbar und wieder entfernbar ist, und dass die Antenne (10) mit dem an der Dichtung (3) anliegenden metallischen Fahrzeugteil (14) eine zwischen wenigstens zwei Metallflächen (1, 14) wirksame Schlitzantenne bildet, und dass die Antenne (10) in dem Zustand, bei dem kein Fahrzeugteil an der Dichtung (3) anliegt, einen flachen elektrischen Empfangs-Monopol bildet, der im Abstand von einer die Antennenmasse bildenden Metallfläche (1) verläuft.

2. Antennenanordnung nach Anspruch 1, **dadurch gekennzeichnet, dass** die Antenne (10) als ein elektrischer Leiter (8) auf der Dichtungsfläche (7) der Dichtung (3) aufgebracht ist, so dass das metallische Fahrzeugteil (14) im anliegenden Zustand an dem elektrischen Leiter (8) anliegt.

3. Antennenanordnung nach Anspruch 2, **dadurch gekennzeichnet, dass** der elektrische Leiter (8) auf die Dichtung (3) aufgedruckt oder aufgeklebt ist.

4. Antennenanordnung nach Anspruch 1, **dadurch gekennzeichnet, dass** die Antenne (10) als ein elektrischer Leiter (8) im Dichtungsmaterial einliegt und das metallische Fahrzeugteil (14) im anliegenden Zustand kapazitiv mit dem elektrischen Leiter (8) gekoppelt ist.

5. Antennenanordnung nach einem der Ansprüche 2 bis 4, **dadurch gekennzeichnet, dass** die Dichtung (3) einen c-förmigen Querschnitt und somit einen sich in Längsrichtung der Dichtung (3) erstreckenden Öffnungsschlitz (4) hat, und dass sich der schmale elektrische Leiter (8) in Längsrichtung der Dichtung (3) auf deren dem Öffnungsschlitz (4) abgewandten Außenseite erstreckt.

6. Antennenanordnung nach einem der Ansprüche 1 bis 4, **dadurch gekennzeichnet, dass** die Dichtung (3) als schlauchförmige Dichtung ausgebildet ist.

7. Antennenanordnung nach einem der Ansprüche 2 bis 6, **dadurch gekennzeichnet, dass** die wirksame Dichtungsfläche (7) breiter ist als der elektrische Leiter (8).

8. Antennenanordnung nach einem der Ansprüche 2 bis 7, **dadurch gekennzeichnet, dass** die Dichtung (3) mit dem elektrischen Leiter (8) eine von zwei oder mehreren Fahrzeugantennen (10, 16) bilden kann, die Teil eines Antennen-Diversitysystems (19) sind.

9. Antennenanordnung nach Anspruch 8, **dadurch gekennzeichnet, dass** beim Anlegen des Fahrzeugteils (14) an die Dichtung (3) oder beim Abheben des Fahrzeugteils (14) von der Dichtung (3) die sich daraus ergebende Veränderung der Antennencharakteristik mittels einer Auswerteeinrichtung (18) festgestellt und zur Steuerung des Antennen-Diversitysystems (19) herangezogen werden kann.

## Claims

1. Antenna arrangement for a motor vehicle, having at least one seal (3) made of a non-conductive material, and comprising an antenna (10) which is applied in the region of a sealing face (7) of the seal (3) and has the purpose of receiving radio signals, **characterised in that** the arrangement comprises a convertible roof or sun roof or other metallic vehicle part (14) which can be placed in contact with the sealing face (7) during the operation of the antenna and can be removed again, wherein the antenna (10) forms, with the metallic vehicle part (14) which is in contact with the seal (3), a slot antenna which is effective between at least two metal faces (1, 14), and **in that**, in the state in which no vehicle part is in contact with the seal (3), the antenna (10) forms a flat electrical reception monopole which extends at a distance from a metal face (1) which forms the antenna earth.

2. Antenna arrangement according to claim 1, **characterised in that** the antenna (10) is applied as an electrical conductor (8) on the sealing face (7) of the seal (3), such that the metal vehicle part (14) is in contact with the electrical conductor (8) in the in-contact state.

3. Antenna arrangement according to claim 2, **characterised in that** the electrical conductor (8) is printed or glued on the seal (3).

4. Antenna arrangement according to claim 1, **characterised in that** the antenna (10) is embedded as an electrical conductor (8) in the sealing material, and the metal vehicle part (14) is capacitively coupled with the electrical conductor (8) in the in-contact state.

5. Antenna arrangement according to one of claims 2 to 4, **characterised in that** the seal (3) has a C-shaped cross-section and thus has an opening slot (4) extending in the longitudinal direction of the seal (3), and **in that** the narrow electrical conductor (8) extends in the longitudinal direction of the seal (3) on the outer side thereof that faces away from the opening slot (4).

6. Antenna arrangement according to one of claims 1 to 4, **characterised in that** the seal (3) is configured as a tubular seal.

7. Antenna arrangement according to one of claims 2 to 6, **characterised in that** the effective seal surface (7) is wider than the electrical conductor (8).

8. Antenna arrangement according to one of claims 2 to 7, **characterised in that** the seal (3) together with the electrical conductor (8) can form one of two or more vehicle antennas (10, 16) which are part of an antenna diversity system (19).

9. Antenna arrangement according to claim 8, **characterised in that** when the vehicle part (14) is brought into contact with the seal (3), or when lifting the vehicle part (14) from the seal (3), the resulting change in the antenna characteristic is determined by means of an evaluation unit (18) and can be used for controlling the antenna diversity system (19).

## Revendications

1. Ensemble formant antenne pour un véhicule automobile, qui a au moins un joint d'étanchéité (3) constitué d'un matériau non conducteur, avec une antenne (10) installée dans la zone d'une surface d'étanchéité (7) du joint d'étanchéité (3), servant à recevoir des signaux radio, **caractérisé en ce que** l'ensemble comprend une capote de cabriolet ou un toit ouvrant ou toute autre pièce de véhicule (14) métallique, qui peut être placée au niveau de la surface d'étanchéité (7) au cours du fonctionnement des antennes et qui peut en être retirée à nouveau, et **en ce que** l'antenne (10) forme, avec la pièce de véhicule (14) métallique reposant au niveau du joint d'étanchéité (3), une antenne fendue active entre au moins deux surfaces en métal (1, 14), et **en ce que** l'antenne (10) forme dans l'état, dans lequel aucune pièce de véhicule ne repose au niveau du joint d'étanchéité (3), un monopôle de réception plat électrique, qui s'étend à distance d'une surface en métal (1) formant la masse de l'antenne.

2. Ensemble formant antenne selon la revendication 1, **caractérisé en ce que** l'antenne (10) est appliquée en tant qu'un conducteur (8) électrique sur la surface d'étanchéité (7) du joint d'étanchéité (3) de sorte que la pièce de véhicule (14) métallique repose, dans l'état posé, au niveau du conducteur (8) électrique.

3. Ensemble formant antenne selon la revendication 2, **caractérisé en ce que** le conducteur (8) électrique est imprimé ou collé sur le joint d'étanchéité (3).

4. Ensemble formant antenne selon la revendication 1, **caractérisé en ce que** l'antenne (10) est logée dans le matériau d'étanchéité en tant que conducteur (8) électrique, et la pièce de véhicule (14) métallique est couplée, dans l'état posé, de manière capacitive au conducteur (8) électrique.

5. Ensemble formant antenne selon l'une quelconque des revendications 2 à 4, **caractérisé en ce que** le joint d'étanchéité (3) a une section transversale présentant une forme de c et, ainsi, une fente d'ouverture (4) s'étendant dans la direction longitudinale du joint d'étanchéité (3), et **en ce que** le conducteur (8) électrique étroit s'étend dans la direction longitudinale du joint d'étanchéité (3) sur le côté extérieur de ce dernier opposé à la fente d'ouverture (4).

6. Ensemble formant antenne selon l'une quelconque des revendications 1 à 4, **caractérisé en ce que** le joint d'étanchéité (3) est réalisé sous la forme d'un joint d'étanchéité présentant une forme de tuyau flexible.

7. Ensemble formant antenne selon l'une quelconque des revendications 2 à 6, **caractérisé en ce que** la surface d'étanchéité (7) active est plus large que le conducteur (8) électrique.

8. Ensemble formant antenne selon l'une quelconque des revendications 2 à 7, **caractérisé en ce que** le joint d'étanchéité (3) peut former, avec le conducteur (8) électrique, une parmi deux ou plusieurs antennes de véhicule (10, 16), qui font partie d'un système de diversité d'antennes (19).

9. Ensemble formant antenne selon la revendication 8, **caractérisé en ce que** lorsque la pièce de véhicule (14) est placée contre le joint d'étanchéité (3) ou lorsque la pièce de véhicule (14) est détachée du joint d'étanchéité (3), la modification en résultant de la caractéristique d'antenne peut être constatée au moyen d'un système d'analyse (18) et peut être prise en compte afin de commander le système de diversité d'antennes (19).
